# EUROPÄISCHE PATENTSCHRIFT

(11) **EP 2 434 863 B1**
(45) Veröffentlichungstag und Bekanntmachung des Hinweises auf die Patenterteilung: **17.04.2013**
(21) Anmeldenummer: 10720315.0
(22) Anmeldetag: 07.05.2010
(51) Int. Cl.: A01F 15/07

(54) **WICKELEINRICHTUNG**
WRAPPING DEVICE
DISPOSITIF D'ENRUBANNAGE

(30) Priorität: 29.05.2009 NL 1037002
(43) Veröffentlichungstag der Anmeldung: 04.04.2012
(73) Patentinhaber: Lely Patent N.V., 3147 PA Maassluis (NL)
(72) Erfinder: REIJERSEN-VAN BUUREN, Willem Jacobus, 3147 PA Maassluis (NL)
(86) Internationale Anmeldenummer: PCT/NL2010/000077
(87) Internationale Veröffentlichungsnummer: WO 2010/151110

(56) Entgegenhaltungen:
- EP-A1- 2 050 330
- DE-U1- 9 414 220
- GB-A- 2 188 587
- US-A- 4 685 270

## Beschreibung

Die Erfindung betrifft eine Wickeleinrichtung zum Umhüllen oder Verpacken von insbesondere landwirtschaftlichen Erntegutballen nach dem Oberbegriff des Patentanspruches 1.

Die vorstehend beschriebene Einrichtung lässt sich der EP 2 050 330 A1 und der DE 94 14 220 U1 entnehmen. Für eine gleichmäßige Umwicklung des Ballens mit Wickelmaterialbahnen, z.B. Folienbahnen, müssen die Wickelmaterialträger auf Höhe der Zylinderachse des Ballens zentrisch um den Ballen herumgeführt werden. Um dieses bei Ballen mit unterschiedlichen Durchmessern zu gewährleisten, ist hier der Führungsrahmen für den Wickelmaterialträger mittels einer Höhenverstellvorrichtung in vertikaler Richtung und rechtwinklig zum Wickelboden geradlinig an einem Gestell höhenverschiebbar angeordnet. Mit diesen bekannten Vorrichtungen lassen sich grundsätzlich Ballen mit gleichmäßiger Qualität der Bewicklung bilden.

Die vorbekannten Vorrichtungen weisen neben dem verhältnismäßig aufwändigen konstruktiven Aufbau der translatorischen Schiebebewegung den großen Nachteil auf, dass diese in Verbindung mit einer Ballenpresse einen großen Bauraumbedarf sowohl in der Länge der Maschine als auch in der Höhe verursachen. Nachteilig ist ferner, dass bereits vorhandene Funktionen für die translatorische Höhenverstellbarkeit nicht nutzbar sind. Eine gewünschte, raumsparende Transportstellung für den Führungsrahmen ist nur mit erheblichem Zusatzaufwand möglich.

Bei einer anderen bekannten Ausführungsform DE 103 34 681 B3 ist der gesamte Wickeltisch mit dem darauf liegenden Erntegutballen in eine Position anheb- oder absenkbar, in der das Wickelmaterial zentral um den Erntegutballen herumgeführt werden kann. Nachteilig ist der relativ aufwendige Hub- oder Senkmechanismus, um die hohen Massen von etwa 1200 bis 1600 kg zu bewegen und den Wickeltisch mit dem darauf befindlichen Erntegutballen in der eingestellten Höhe während des Wickelns stabil zu halten.

Durch die EP 1 285 571 A1 ist eine Vorrichtung zum Pressen und Umhüllen von Rundballen bekannt, die eine Ballenpresse mit variablem Pressraum zur Erzeugung von Ballen mit unterschiedlichen Durchmessern und einen liegenden, ovalen Führungsrahmen für den Umlauf des Wickelmaterials aufweist. Der Führungsrahmen umschließt den Rundballen, so dass dieser im Pressraum umwickelt werden kann, ohne ihn vorher zum Wickelvorgang abgeben zu müssen. Diese Vorrichtung weist den Nachteil auf, dass keine Vorrichtung vorgesehen ist, um das Wickelmaterial bei unterschiedlichen Ballendurchmessern in der Höhe zu positionieren, wodurch keine gleichmäßige Ballenumwicklung erzielbar ist. Der Führungsrahmen ist zum Entladen des Ballens um die unterhalb des Pressraumes gelegene Fahrzeugachse verschwenkbar. Eine zusätzliche translatorische Höhenverstellbarkeit des Führungsrahmens gemäß EP 2 050 330 A1 und der DE 94 14 220 U1 ist weder von der Funktion her noch aufgrund des Aufwandes darstellbar. Auch die Lehre gemäß DE 103 34 681 B3 lässt sich nicht übertragen. Einerseits weist der Pressraumboden antreibbare Presselemente auf, andererseits muss der halbe Pressraumboden zum Entladen des fertigen Ballens nach unten geklappt werden, so dass für weitere Hebe- oder Senkmechanismen kein Platz vorhanden ist. Grundsätzlich hat diese Vorrichtung den Nachteil, dass während des Wickelvorganges kein Rundballen gepresst werden kann.

Weitere Wickeleinrichtungen sind aus der GB 2 188 587 A und der US 4 685 270 A bekannt.

Der Erfindung liegt die Aufgabe zugrunde, die vorstehend beschriebene Vorrichtung zu verbessern und insbesondere für Wickeleinrichtungen mit einem Führungsrahmen für das Wickelmaterial eine einfache Lösung zu entwickeln.

Diese Aufgabe wird erfindungsgemäß durch die Merkmale des Patentanspruches 1 gelöst, wobei in den weiteren Patentansprüchen Merkmale aufgeführt sind, die die Lösung in vorteilhafter Weise weiterentwickeln.

Bei der z. B. in der EP 1 285 571 A1 offenbarten Rundballenpresse umschließt ein ringförmiger Führungsrahmen mit einem bzw. zwei Wickelmaterialträgern einen variablen Pressraum. Ausgehend von einer derartigen Wickeleinrichtung wird nun erfindungsgemäß vorgeschlagen, dass der Führungsrahmen um eine horizontale, parallel zur Drehachse des Erntegutballens gelegene Achse verschwenkbar ist. Eine Verschwenkbewegung ist konstruktiv einfacher und raumsparender zu gestalten als eine translatorische Bewegung. Die Verschwenkbewegung ermöglicht es, dass der Führungsrahmen nahe und sogar teilweise unterhalb des Pressraumes angeordnet werden kann. Ein weiterer Vorteil ergibt sich dadurch, dass vorhandene Stellvorrichtungen für den Führungsrahmen genutzt werden können, weil dieser ohnehin zum Entladen des fertig gewickelten Ballens oder auch bei Nichtbetrieb in eine Transportstellung verschwenkbar sein muss. Translatorische Höhenverstelleinrichtungen des Führungsrahmens sind hier ungeeignet, weil dieser in vertikaler Richtung insgesamt sehr weit ausgehoben werden müsste. Ist die Wickeleinrichtung einem Pressraum nachgeschaltet, erfordert eine translatorische Höhenverstelleinrichtung des Führungsrahmens eine größere Maschinenlänge wegen des erforderlichen, größeren Freiraumes zwischen Pressraum und Wickeleinrichtung. Die Verschwenkung lässt sich in vorteilhafter Weise auch an angehängten oder gezogenen Wickeleinrichtungen mit einem oder mehreren Dreharm /-en darstellen.

Ideale Wickelverhältnisse mit gleichmäßigem Überlappungsabstand der Wickelmaterialbahnen werden dann erzielt, wenn die Achse etwa auf der Höhe der Mitte des Wickelmaterials für einen sich auf dem Wickelboden befindlichen, mittelgroßen Erntegutballen angeordnet ist. Dadurch bleibt der Wickelmaterialträger in dem erforderlichen Verschwenkwinkelbereich während seines Umlaufes nahezu konzentrisch zur Ballenmitte.

Die Anpassung des Wickelmaterials zentral auf die Höhe der Mitte des Erntegutballens erfolgt dadurch, dass der Führungsrahmen mit unterschiedlichen Neigungswinkeln zum Wickelboden einstellbar ist.

Zweckmäßigerweise ist der Führungsrahmen in der Wickelstellung festlegbar, so dass dieser mit Bezug auf den Förderboden einen konstanten Abstand einnimmt, während der Führungsrahmen in einer Transportstellung um seine Drehachse beweglich ist, wobei die Bewegung durch Feder- und/oder Dämpfermittel beschränkt ist.

Hierdurch ist beim Wickeln eine genaue Positionierung gewährleistet, während beim Straßentransport mit hohen Geschwindigkeiten Kraft- und Spannungsspitzen durch die federelastische Lagerung vermieden werden.

Nach einem weiteren Kennzeichen der Erfindung ist vorgesehen, dass der Führungsrahmen einen Ring oder wenigstens einen Dreharm aufweist. Die Ausführungsform mit einem Ring ermöglicht insbesondere bei einer Kombination einer Ballenpresse mit einer Wickeleinrichtung vorteilhafte, kompakte Bauformen während die Ausführungsform mit einem Dreharm im Solobetrieb der Wickeleinrichtung angehängt an einen Schlepper oder auf Rädern gezogen von einem Schlepper vorteilhaft ist.

In weiterer Ausgestaltung der Erfindung ist vorgesehen, dass der Führungsrahmen in vertikaler Richtung und rechtwinklig zum Wickelboden geradlinig höhenverschiebbar ausgestaltet und in unterschiedlichem Abstand zum Wickelboden feststellbar ist.

In weiterer Ausgestaltung der Erfindung ist vorgesehen, dass der Führungsrahmen mittels einer Stelleinrichtung in Abhängigkeit vom Durchmesser des Erntegutballens und/oder von der Breite des Wickelmaterials verstellbar ist.

In einer bevorzugten Ausführungsform werden die in einer zum Pressen unterschiedlicher Ballengrößen geeigneten Rundballenpresse ermittelten Ist-Durchmesser der Erntegutballen als Parameter zur Verstellung des Führungsrahmens verwendet, da diese ohnehin bereits für die Pressensteuerung benötigt werden und daher bereits vorliegen.

Nach einem weiteren Kennzeichen der Erfindung steht eine Steuervorrichtung mit einem die Position des Führungsrahmens ermittelnden Sensor und/ oder mit einem die Breite des Wickelmaterials erfassenden Sensor in Wirkverbindung. In einfacher Weise sind an der Steuervorrichtung Sollwerte für den Ballendurchmesser eingebbar oder die Sollwerte werden beispielsweise automatisch von der Rundballenpresse übernommen. Die Steuervorrichtung bildet aus diesen Werten Ausgangssignale für die Stellvorrichtung und bewirkt eine Verstellung des Führungsrahmens in die gewünschte Position. Desgleichen sind an der Steuervorrichtung Sollwerte für die Breite des Wickelmaterials eingebbar oder Informationen über die Breite des Bindematerials werden durch einen geeigneten Sensor ermittelt und zur Einstellung genutzt.

Drei Beispiele des Erfindungsgegenstandes sind in der Zeichnung dargestellt und werden im Folgenden näher beschrieben. Hierbei zeigt:
Fig. 1 einen Ausschnitt einer Rundballenpresse mit einer erfindungsgemäßen Wickeleinrichtung in einer Stellung des Führungsrahmens bei größtmöglichem Ballendurchmesser,
Fig. 2 eine Ansicht nach Figur 1 in einer Stellung des Führungsrahmens bei mittlerem Ballendurchmesser,
Fig. 3 ein Schemaschaltbild einer Stelleinrichtung des Führungsrahmens,
Fig. 4 eine zweite Ausführungsform einer erfindungsgemäßen Wickeleinrichtung, welche einer Rundballenpresse mit variablem Ballenpressraum nachgeschaltet ist,
Fig. 5 einen Ausschnitt einer erfindungsgemäßen Wickeleinrichtung nach Fig. 4 in einer ersten Stellung des Führungsrahmens bei maximalem Ballendurchmesser, einer zweiten Stellung des Führungsrahmens bei mittlerem Ballendurchmesser und einer dritten Stellung bei kleinstem Ballendurchmesser und
Fig. 6 eine schematische Darstellung einer dritten Ausführungsform einer erfindungsgemäßen Wickeleinrichtung mit einem Dreharm.

Hinsichtlich des Aufbaues und der Wirkungsweise einer vorbekannten Rundballenpresse mit variablem Pressraum und integrierter Wickeleinrichtung kann z.B. auf die europäische Patentanmeldung Nr. EP 1 285 571 A1 verwiesen werden.

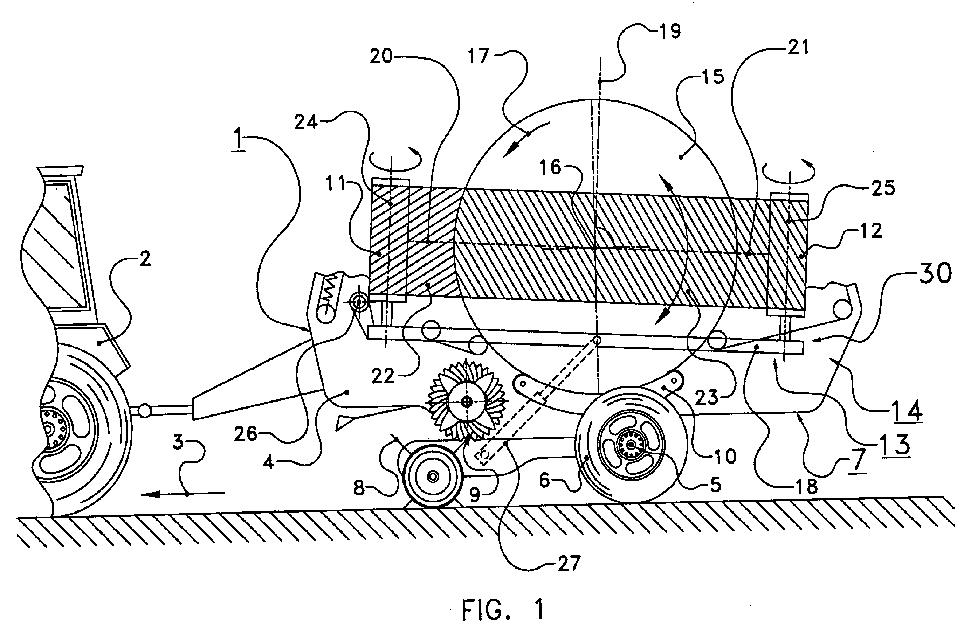

Fig. 1 zeigt eine Rundballenpresse 1, die von einem Zugfahrzeug 2 in durch Pfeil 3 gekennzeichnete Fahrtrichtung gezogen wird. Von dieser Rundballenpresse 1 zeigt Fig. 1 einen Rahmen 4 mit einer Radachse 5 und Rädern 6, den unteren Teil einer Pressanordnung 7, einen Aufsammler 8, einen Förder- bzw. Schneidrotor 9 und einen antreibbaren Förderboden 10.
Ein oberer, aufklappbarer Teil der Pressanordnung, der auch mit Sensoren oder anderen geeigneten Mitteln zur Ballendurchmessererfassung versehen sein kann, ist zur besseren Veranschaulichung weggelassen. Oberhalb des Förderbodens 10 ist ein mit zwei Wickelmaterialträgem 11,12 bestückter Führungsrahmen 13 angeordnet, der zusammen mit dem Förderboden 10 eine Wickeleinrichtung 14 für einen fertig gepressten, auf dem Förderboden 10 liegenden Rundballen 15 bildet, die eine beispielsweise Ausführungsform der Erfindung darstellt.

In der Zeichnung ist ein Rundballen 15 mit maximalem Durchmesser dargestellt, der durch einen nicht dargestellten Antrieb des Förderbodens 10 um eine horizontale Mittelachse 16 in Richtung des Pfeils 17 drehbar ist.

Der Führungsrahmen 13 enthält einen vorzugsweise kreisrunden Ring 18 mit zwei um 180° versetzten Wickelmaterialträgern 11, 12, welche den Ballen 15 während des Wickelvorganges um eine aufrechte Achse 19 umkreisen, die senkrecht zur Drehachse 16 des Rundballens 15 angeordnet ist. Der Ring 18 ist bei dem in Fig. 1 gezeigten Rundballen 15 etwa horizontal ausgerichtet. Die Lage des Ringes 18 ist so gewählt, das die Mitten 20, 21 der Wickelmaterialbahnen 22, 23 auf der Höhe der Drehachse 16 des Rundballens 15 in einer horizontalen Bahn um den Rundballen 15 bewegt werden, und die Abstände der Achsen 24, 25 beider Wickelmaterialträger 11, 12 zum Rundballenmittelpunkt gleich sind, welches eine Umwicklung des Rundballens 15 mit gleichmäßiger Überlappung gewährleistet. Der Ring 18 ist an seinem vorderen Ende um eine horizontale, parallel zur Drehachse 16 des Rundballens 15 angeordnete Achse 26 verschwenkbar am Rahmen 4 gelagert. Zwischen Rahmen 4 und Ring 18 ist ein Hydraulikzylinder als Stellvorrichtung 27 angeordnet. Die Achse 26 liegt etwa auf Höhe der Unterkante der Wickelmaterialbahn 22, 23 möglichst weit außerhalb der Bewegungsbahn der Wickelmaterialträger 24, 25, so dass Rundballen unterschiedlicher Größe in dem relativ kleinen Verschwenkwinkelbereich des Ringes 18 eine mittige Position zu der Bewegungsbahn der Wickelmaterialträger 11, 12 einnehmen.

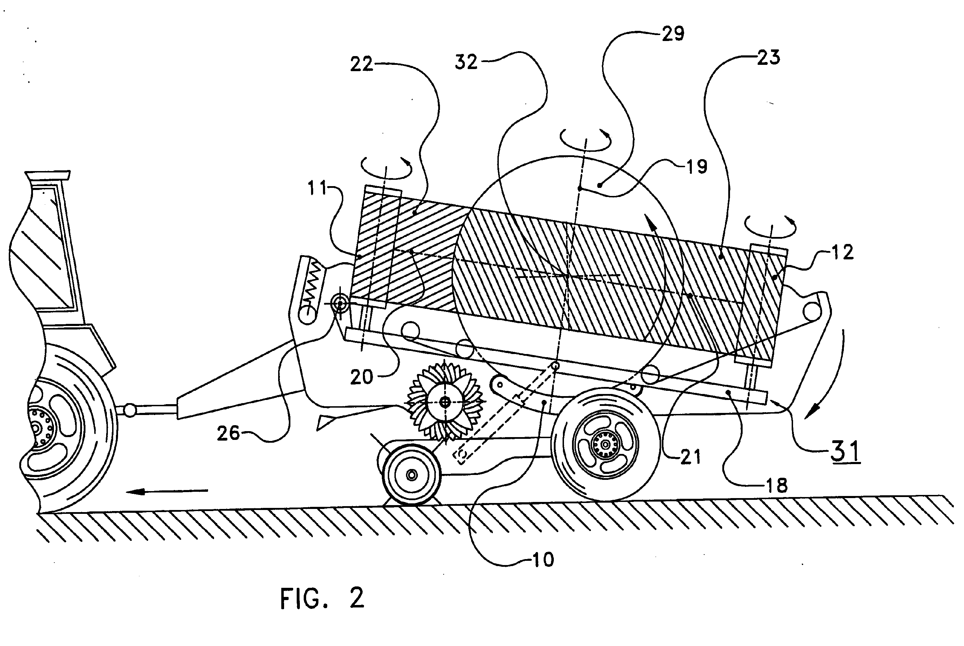

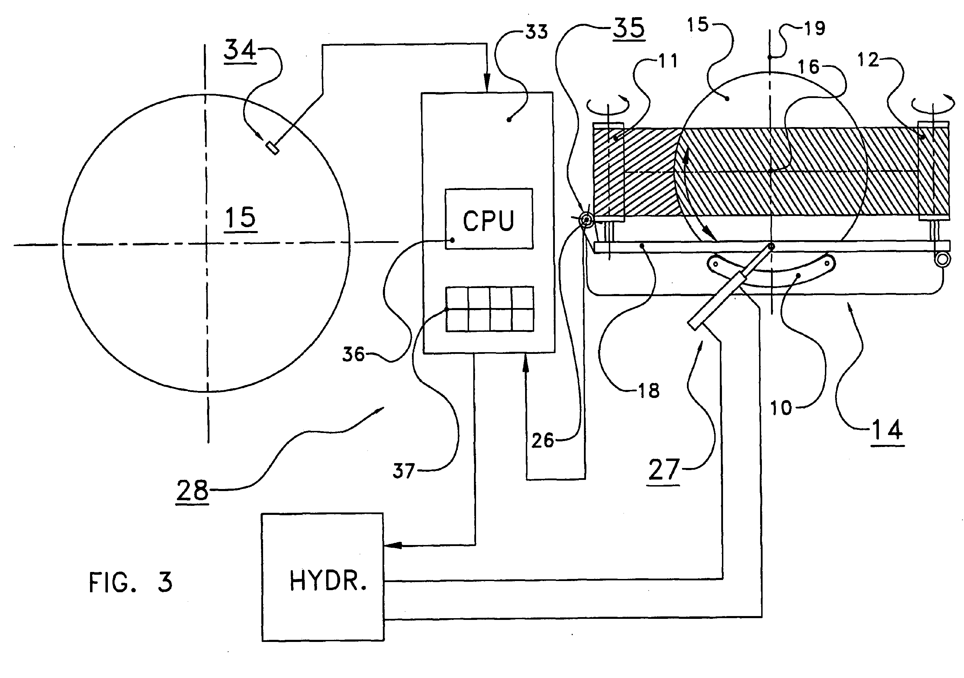

Der Ring 18 ist zum Umwickeln von Rundballen mit unterschiedlichen Ballendurchmessern mittels einer Stelleinrichtung 28, siehe Fig. 3, in seiner Neigung zur Horizontalen einstellbar, um die Mitte 20, 21 der Wickelmaterialbahn 22, 23 jeweils auf die Höhe der Drehachse eines Rundballens zu positionieren. In Fig. 2 ist ein Rundballen 29 mit mittlerem Durchmesser während des Wickelvorganges dargestellt. Der Ring 18 hat gegenüber der in Fig.1 gezeigten, etwa horizontalen Stellung 30 nun eine schräg nach hinten abfallende Stellung 31 und schließt mit der Horizontalen einen größeren Winkel ein. Die aufrechte, zur Vertikalen geneigte Achse 19 der Bewegungsbahn der Wickelmaterialträger 11, 12 und die Mitten 20, 21 der Wickelmaterialbahnen 22, 23 laufen durch die Drehachse 32 des Rundballens 29.

Zur Steuerung der Neigung des Ringes 18 ist in der Stelleinrichtung 28, siehe Schaltschema in Fig. 3, eine Steuervorrichtung 33 vorgesehen, zu der ein Sensor 34 für den Ist-Ballendurchmesser, ein Sensor 35 für die Ist-Stellung (Neigung) des Ringes 18, eine Signalverarbeitungseinheit 36, eine Eingabeeinheit 37, eine Energieversorgung und verschiedene Verbindungsleitungen gehören, die schließlich auf die Stellvorrichtung 27 einwirken. Die Stellvorrichtung 27 umfasst vorzugsweise einen doppeltwirkenden Hydraulikzylinder, der über an sich bekannte Elektromagnetventile gesteuert wird.

Der Sensor 34 für den Ist-Ballendurchmesser ist vorteilhafterweise auf der Presse 1 angeordnet, kann aber auch der Wickeleinrichtung 14 zugeordnet sein. Im Falle einer Rundballenpresse mit konstantem Ballenpressraum kann dieser Sensor entfallen und die Sollvorgabe des Ballendurchmessers und/oder der Breite der Wickelmaterialbahn an der Eingabeeinheit, z. B. an einem Bediengerät erfolgen. Es kann auch ein nicht dargestellter Sensor für die Breite der Wickelmaterialbahn vorgesehen sein.

Der Sensor 35 für die Ist-Stellung (Neigung) des Ringes 18 ist beispielsweise ein der Achse 26 des Ringes 18 zugeordnetes Drehpotentiometer. Alternativ kann z. B. ein Hydraulikzylinder mit Wegmesssystem eingesetzt werden.

Die Signalverarbeitungseinheit 36 ist in der Art eines Bordcomputers ausgebildet, in die Energie aus der Energieversorgung von dem Zugfahrzeug 2 eingespeist wird, die den Ablauf von

Computerprogrammen und/ oder Rechenvorgängen ermöglicht. Die Signalverarbeitungseinheit 36 erhält Signale von den Sensoren 34, 35. Von der Signalverarbeitungseinheit 36 führt eine Leitung zu der Stellvorrichtung 27, um dieser ein Signal für das Aus- oder Einfahren zuzuleiten, wodurch der Abstand zwischen Förderboden 10 und Ring 18 vergrößert oder verkleinert wird.

Die Funktionsweise der Erfindung ist am Beispiel einer Rundballenpresse 1 mit variablem Pressraum wie folgt:

Zum Arbeitseinsatz wird die Rundballenpresse 1 mit dem Zugfahrzeug 2 auf ein Feld gefahren und in Betrieb gesetzt. Die Signalverarbeitungseinheit 36 wird aktiviert und an der Eingabeeinheit 37 wird der gewünschte Ballendurchmesser eingestellt. Der Sensor 35 ermittelt nun die Neigung des Ringes 18 gegenüber der Horizontalen und die Stellvorrichtung 27 verstellt die Neigung des Ringes 18 gemäß der Vorgabe des Ballendurchmessers in der Eingabeeinheit 37. Gleiches gilt entsprechend für die Breite der Wickelmaterialbahn. Die Rundballenpresse 1 wird vom Zugfahrzeug 2 über ein Halmgutschwad gezogen und ein mit der Gutzufuhr im Durchmesser wachsender Rundballen gepresst Das Erreichen des voreingestellten Ballendurchmessers signalisiert der Sensor 34 für den Ist-Ballendurchmesser an die Signalverarbeitungseinheit 36, welche diese Information mit einem Sollwert vergleicht. Je nach der Richtung der Abweichung wird dann die Stellvorrichtung 27 aus- oder eingefahren, um den Istwert an den Sollwert anzugleichen. Gleichzeitig wird die Gutzufuhr durch Anhalten der Presse 1 unterbrochen und der obere, nicht dargestellte Pressabschnitt der Pressanordnung soweit angehoben, dass die Wickelmaterialträger 11, 12 den Rundballen 15 frei umkreisen können. Die Wickelmaterialträger 11, 12 und der Rundballen 15 rotieren während des Wickelvorganges gleichzeitig, wobei das Wickelmaterial von den Wickelmaterialträgem 11, 12 abgezogen und mit gleichmäßigem Abstand der Überlappungen um den Rundballen 15 gewickelt wird.

Wenn z. B. am Feldende nur noch ein kleiner Restballen zustande kommt, so signalisiert der Sensor 34 diesen "kleinen" Ballendurchmesser an die Signalverarbeitungseinheit 36. Diese bewirkt automatisch eine Verstellung der Neigung des Ringes 18, so dass die Mitte der Wickelmaterialbahn beim Umwickeln durch die Mitte des kleineren Rundballens läuft und auch eine einwandfreie Umwicklung gewährleistet ist.

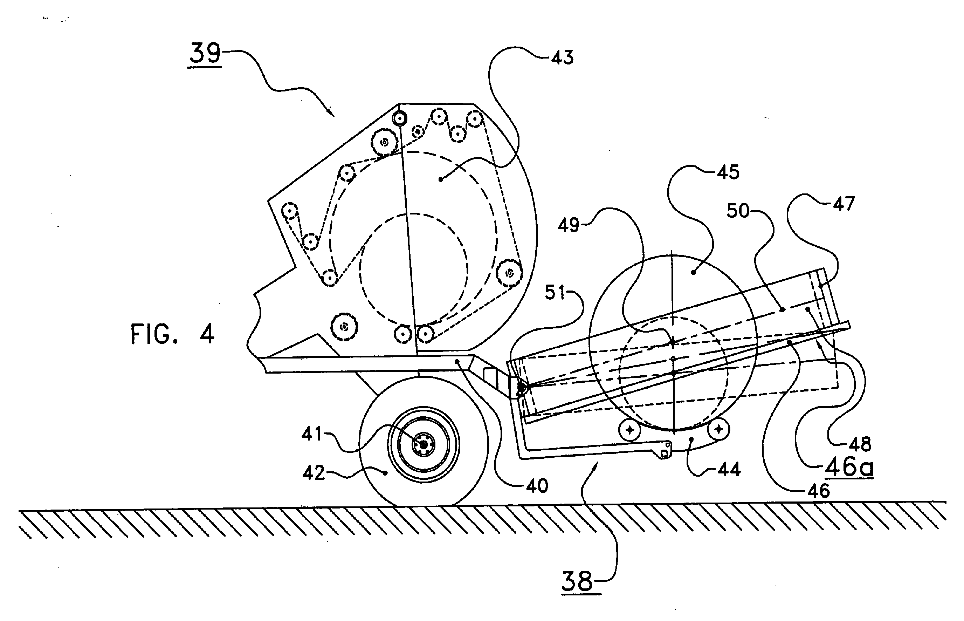

In dem Ausführungsbeispiel nach Fig. 4 ist die Wickeleinrichtung 38 einer Rundballenpresse 39 nachgeschaltet. Die Rundballenpresse 39 und die Wickeleinrichtung 38 werden von einem Tragrahmen 40 getragen, der wenigstens eine Radachse 41 mit zwei Rädern 42 aufweist. Der Pressraum 43 der Ballenpresse 1 ist zum Pressen unterschiedlicher Ballengrößen verstellbar ausgebildet. Die Wickeleinrichtung 38 weist einen Wickelboden 44 zur Aufnahme des gepressten Ballens 45 auf und enthält einen Führungsrahmen 46 mit wenigstens einem Wickelmaterialträger 47 zum Umwickeln des auf dem Wickelboden 44 liegenden Ballens 45 mit einer bahnförmigen Wickelfolie 48. Der Wickelboden 44 ist in Fahrtrichtung gesehen hinter der Radachse 41 und etwa auf der Höhe der Radachse 41 angeordnet. Der Wickelboden 44 ist mit einem nicht gezeigten Antrieb zum Drehen des gepressten Ballens 45 um eine horizontale, parallel zur Radachse 41 liegende Mittelachse 49 versehen.

Der Führungsrahmen 46 enthält vorzugsweise einen kreisrunden Ring, der in einer in Fig. 4 dargestellten Wickelstellung 46a bei einem größtmöglichen Ballendurchmesser von der Radachse 41 weg, schräg ansteigend angeordnet ist. Die Lage des Führungsrahmens 46 zum Wickelboden 44 ist einerseits so gewählt, dass der Ballen 45 während des Wickelprozesses mittig zu der Bewegungsbahn des Wickelmaterialträgers 47 positioniert ist und andererseits die Mitte 50 der Wickelfolie 48 zumindest annähernd durch die Mittelachse 49 des Ballens 45 läuft.

Mit dieser gewählten Anordnung lassen sich Rundballen konstanter Größe ohne Verstellung des Führungsrahmens 46 einwandfrei mit gleichmäßiger Überlappung umwickeln. Um eine kurze Baulänge zu erreichen, kann es zweckmäßig sein, den Führungsrahmen 46 in eine aufrechte, nicht gezeigte Transportstellung zu bringen.

Um Ballen mit unterschiedlichem Durchmesser ohne eine Höhenverstellung des Wickel bodens 44 einwandfrei umwickeln zu können, ist der Führungsrahmen 46 um eine an seinem der Radachse 41 nahen Ende angeordnete Drehachse 51 verschwenkbar am Tragrahmen 40 gelagert. Die Drehachse 51 ist parallel zur Mittelachse 49 des Ballens 45 außerhalb der Umlaufbahn des Wickelmaterialträgers 47 auf der Höhe der Mitte 50 der Wickelfolie 48 angeordnet.

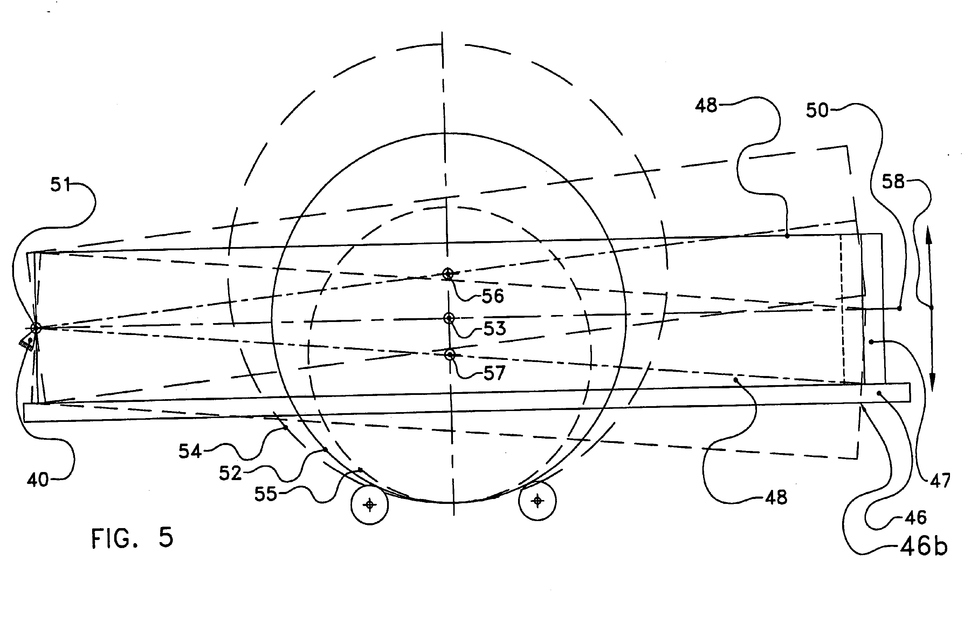

In Fig. 5 ist in Volllinie ein mittelgroßer Ballen 52 mit dessen Drehachse 53 auf dem Wickelboden 44 dargestellt. Der größtmögliche Ballen 54 und der kleinstmögliche Ballen 55 sind in Strichlinie mit ihrer jeweiligen Drehachse 56, 57 gezeichnet. Die Höhenlage der Drehachse 51 zum Wickelboden 44 ist so gewählt, dass die Mitte 50 der Wickelfolie 48 in der in Volllinie gezeichneten Wickelstellung 46b des Führungsrahmens 46 durch die Drehachse 53 des mittelgroßen Ballens 52 läuft. Durch diese Wahl bleibt die Konzentrizität des Wickelmaterialträger 47 zur Mitte des Ballens sowohl bei einem großen Ballen 54 als auch bei einem kleinen Ballen 55 trotz Verschwenkung, siehe Pfeil 58, des Führungsrahmens 46 erhalten, was Voraussetzung für eine Ballenumwicklung mit gleichmäßiger Überlappung ist. Zur Verschwenkung dient die in Fig. 3 dargestellte und vorstehend beschriebene Stelleinrichtung 28 in gleicher Weise. Im Rahmen der vorliegenden Erfindung können nicht nur Rundballen, sondern auch Quaderballen umhüllt oder verpackt werden.

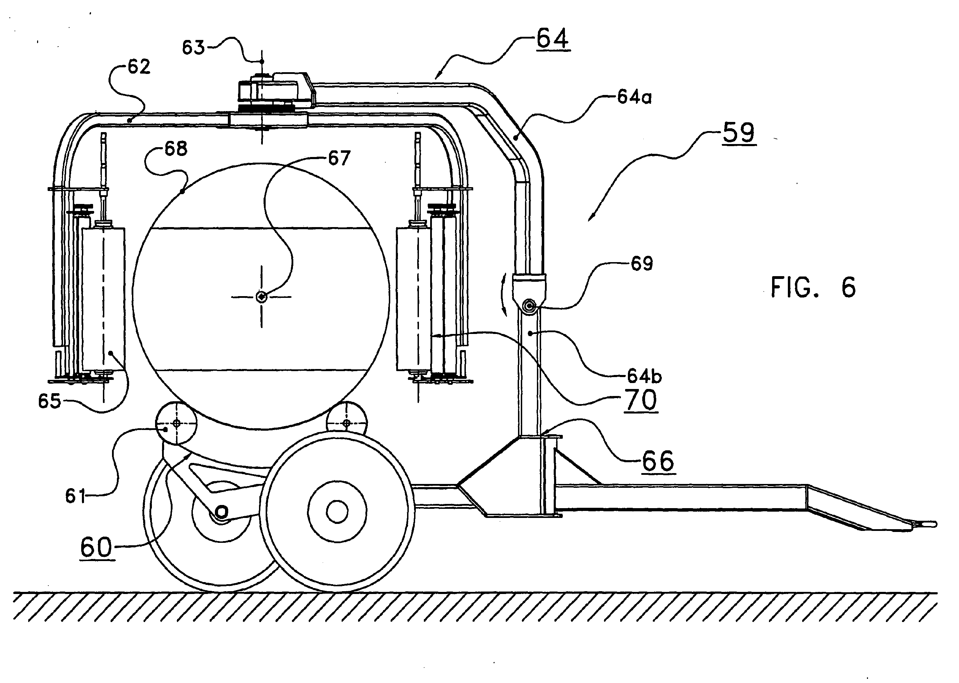

In dem Ausführungsbeispiel nach Figur 6 ist der Ring des Führungsrahmens durch einen Dreharm ersetzt.

Eine Wickeleinrichtung 59 besteht im Wesentlichen aus einem Wickelboden 60 mit antreibbaren Förderelementen 61 und einem Dreharm 62, der um eine vertikale Achse 63 drehbar an einem Tragarm 64 gelagert ist und am unteren Ende einen Wickelmaterialträger 65 aufweist. Der Tragarm 64 und der Wickelboden 60 stützen sich auf einem Maschinengestell 66 ab, das über nicht dargestellte Anlenkstellen an einen Schlepper anschließbar ist. Der Tragarm 64 weist etwa auf der Höhe der Ballenmittelachse 67 eines auf dem Wickelboden 60 befindlichen Ballens 68 mit mittlerem Durchmesser ein Schwenklager 69 auf, welches achsparallel zur Ballenmittelachse 67 angeordnet ist. Das obere Tragarmteil 64a ist gegenüber dem unteren, gestellfesten Tragarmteil 64b mittels einer Stellvorrichtung 70 nach oben und unten verschwenkbar.

Das Wickelmaterial lässt sich entsprechend den vorangegangenen Ausführungsbeispielen durch einfaches Verschwenken des oberen Tragarmteiles 64a mittels der Stellvorrichtung 70 jeweils auf die Höhe der Mitte unterschiedlich großer Erntegutballen ausrichten, wodurch eine Umhüllung mit gleichmäßigem Wicklungsabstand gewährleistet ist.

## Patentansprüche

1. Wickeleinrichtung (14, 38, 59) zum Umhüllen oder Verpacken von insbesondere landwirtschaftlichen Erntegutballen (15, 29, 45, 52, 54, 55, 68), mit einem Wickelboden (10, 44, 60) zur Aufnahme und zum Drehen des gepressten Erntegutballens und einem Führungsrahmen (13, 46, 64) für wenigstens einen Wickelmaterialträger (11, 12, 47, 65) zum Umwickeln des auf dem Wickelboden (10, 44, 60) liegenden Ballens mit einem bahnförmigen Wickelmaterial (22, 23, 48), **dadurch gekennzeichnet, dass** der Führungsrahmen (13, 46, 64) höhenverstellbar und um eine horizontale, parallel zur Drehachse (16, 32, 49, 53, 56, 57, 67) des Erntegutballens gelegene Achse (26, 51, 69) verschwenkbar ist, um die Mitte (20, 21, 50) des Wickelmaterials etwa in Höhe der Mitte (16, 32, 49, 53, 56, 57, 67) des zu umwickelnden Erntegutballens einzustellen.

2. Wickeleinrichtung nach Anspruch 1, **dadurch gekennzeichnet, dass** die Achse (26, 51, 69) etwa auf der Höhe der Mitte (50) des Wickelmaterials (48) für einen sich auf dem Wickelboden (10, 44, 60) befindlichen, mittelgroßen Erntegutballen (52, 68) angeordnet ist.

3. Wickeleinrichtung nach Anspruch 1 oder 2, **dadurch gekennzeichnet, dass** der Führungsrahmen (13, 46, 64) mit unterschiedlichen Neigungswinkeln zum Wickelboden (10, 44, 60) einstellbar ist

4. Wickeleinrichtung nach Anspruch 1, **dadurch gekennzeichnet, dass** der Führungsrahmen in vertikaler Richtung und rechtwinklig zum Wickelboden (10, 44) geradlinig höhenverschiebbar ausgestaltet und in unterschiedlichem Abstand zum Wickelboden (10, 44) feststellbar ist

5. Wickeleinrichtung nach einem der Ansprüche 1 bis 4, **dadurch gekennzeichnet, dass** der Führungsrahmen (13, 46) mittels einer Stelleinrichtung (28) in Abhängigkeit vom Durchmesser des Erntegutballens (15, 29, 45, 52, 54, 55) und/oder von der Breite des Wickelmaterials (22, 23, 48) verstellbar ist.

6. Wickeleinrichtung nach einem der Ansprüche 1 bis 5, **dadurch gekennzeichnet, dass** die in einer zum Pressen unterschiedlicher Ballengrößen geeigneten Rundballenpresse (1, 39) ermittelten Ist-Durchmesser der Erntegutballen (15, 29, 45, 52, 54, 55) als Parameter zur Verstellung des Führungsrahmens (13, 46) verwendet werden.

7. Wickeleinrichtung nach Anspruch 5 oder 6, **dadurch gekennzeichnet, dass** eine Steuervorrichtung (33) direkt oder indirekt mit einem den Ballendurchmesser erfassenden Sensor (34) und/ oder die Breite des Wickelmaterials (22, 23, 48) erfassenden Sensor in Wirkverbindung steht.

8. Wickeleinrichtung nach Anspruch 7 **dadurch gekennzeichnet, dass** die Steuervorrichtung (33) mit einem die Position des Führungsrahmens (13, 46, 64) ermittelnden Sensor (35) in Wirkverbindung steht.

9. Wickeleinrichtung nach einem oder mehren der vorhergehenden Ansprüche, **dadurch gekennzeichnet, dass** eine Stellvorrichtung (27, 70) zum Verschwenken des Führungsrahmens (13, 46, 64) als elektrischer, pneumatischer oder hydraulischer Linearmotor ausgebildet ist

10. Wickeleinrichtung nach einem oder mehren der vorhergehenden Ansprüche, **dadurch gekennzeichnet, dass** der Führungsrahmen (13, 46) mit dem Wickelmaterialträger (11, 12, 47) motorisch drehbar ist, oder dass wenigstens ein Wickelmaterialträger (11, 12, 47) mittels eines Motors in, an, oder auf dem Führungsrahmen (13, 46) verfahrbar gelagert ist.

11. Wickeleinrichtung nach einem oder mehren der vorhergehenden Ansprüche, **dadurch gekennzeichnet, dass** der Wickelboden (44) einer Ballenpresse (39) nachgeschaltet ist, wobei der Führungsrahmen (46) um eine an seinem der Ballenpresse (39) nahen Ende angeordnete Drehachse (51) verschwenkbar ist

12. Wickeleinrichtung nach einem oder mehren der vorhergehenden Ansprüche, **dadurch gekennzeichnet, dass** der Führungsrahmen (13) dem Pressraum einer Ballenpresse (1) zugeordnet ist und diesen umschließt, wobei der Pressraumboden oder ein Teil davon als Wickelboden (10) ausgestaltet ist.

13. Wickeleinrichtung nach einem oder mehren der vorhergehenden Ansprüche, **dadurch gekennzeichnet, dass** der Führungsrahmen (13, 46) in der Wickelstellung (30, 46a, 46b) festlegbar ist, so dass dieser mit Bezug auf den Förderboden (10, 44) einen konstanten Abstand einnimmt, während der Führungsrahmen (13, 46) in einer Transportstellung um seine Drehachse (26, 51) beweglich ist, wobei die Bewegung durch Feder- und/ oder Dämpfermittel beschränkt ist.

14. Wickeleinrichtung nach einem oder mehreren der vorhergehenden Ansprüche, **dadurch gekennzeichnet, dass** der Führungsrahmen (13, 46, 64) einen Ring (18) oder wenigstens einen Dreharm (62) aufweist

## Claims

1. A wrapping device (14, 38, 59) for enveloping or packing in particular agricultural crop bales (15, 29, 45, 52, 54, 55, 68), comprising a wrapping floor (10, 44, 60) for receiving and rotating the pressed crop bale and a guide frame (13, 46, 64) for at least one wrapping material carrier (11, 12, 47, 65) for enveloping the bale situated on the wrapping floor (10, 44, 60) with wrapping material (22, 23, 48) in the form of webs, **characterized in that** the guide frame (13, 46, 64) is height adjustable and pivotable about a horizontal axle (26, 51, 69) which runs parallel to the axis of rotation (16, 32, 49, 53, 56, 57, 67) of the crop bale, in order to set the center (20, 21, 50) of the wrapping material approximately at the location of the center (16, 32, 49, 53, 56, 57, 67) of the crop bale to be wrapped.

2. The wrapping device as claimed in claim 1, **characterized in that** the axle (26, 51, 69) is arranged approximately at the location of the center (50) of the wrapping material (48) for a medium-sized crop bale (52, 68) which is situated on the wrapping floor (10, 44, 60).

3. The wrapping device as claimed in claim 1 or 2, **characterized in that** the guide frame (13, 46, 64) can be set to different angles of inclination with respect to the wrapping floor (10, 44, 60).

4. The wrapping device as claimed in claim 1, **characterized in that** the guide frame is designed to be height-displaceable in a straight line in the vertical direction and at right angles to the wrapping floor (10, 44) and can be fixed at different distances to the wrapping floor (10, 44).

5. Wrapping device according to one of claims 1 to 4, **characterized in that** the guide frame (13, 46) can be adjusted by means of an adjusting device (28), depending on the diameter of the crop bale (15, 29, 45, 52, 54, 55) and/or the width of the wrapping material (22, 23, 48).

6. Wrapping device according to one of claims 1 to 5, **characterized in that** the actual diameters of the crop bales (15, 29, 45, 52, 54, 55) determined in a round bale press (1, 39) which is suitable for pressing differently sized bales are used as parameters for the adjustment of the guide frame (13, 46).

7. Wrapping device according to claims 5 or 6, **characterized in that** a control device (33) is directly or indirectly operatively connected to a sensor (34) which determines the bale diameter, and/or to a sensor which determines the width of the wrapping material (22, 23, 48).

8. Wrapping device according to one or more of the preceding claims, **characterized in that** the control device (33) is operatively connected to a sensor (35) which determines the position of the guide frame (13, 46, 64).

9. Wrapping device according to one or more of the preceding claims, **characterized in that** an adjusting device (27, 70) for pivoting the guide frame (13, 46, 64) is configured as an electrical, pneumatic or hydraulic linear motor.

10. Wrapping device according to one or more of the preceding claims, **characterized in that** the guide frame (13, 46) with the wrapping material carrier (11, 12, 47) can be rotated by means of a motor, or that at least one wrapping material carrier (11, 12, 47) is mounted in or on the guide frame (13, 46) so as to be displaceable by means of a motor.

11. Wrapping device according to one or more of the preceding claims, **characterized in that** the wrapping floor (44) is arranged downstream of a bale press (39), wherein the guide frame (46) is adjustable about a rotary shaft (51) which is arranged on the end situated near the bale press (39).

12. Wrapping device according to one or more of the preceding claims, **characterized in that** the guide frame (13) is placed near the bale forming chamber of a bale press (1) and encloses the latter, wherein the bale forming chamber floor or a part thereof is configured as a wrapping floor (10).

13. Wrapping device according to one or more of the preceding claims, **characterized in that** the guide frame (13, 46) can be fixed in the wrapping position (30, 46a, 46b), so that it is kept at a constant distance with respect to the transporting floor (10, 44), while, in a transport position, the guide frame (13, 46) is movable about its rotary shaft (26, 51), wherein the movement is limited by spring and/or damping means.

14. Wrapping device according to one or more of the preceding claims, **characterized in that** the guide frame (13, 46, 64) comprises a ring (18) or at least one pivot arm (62).

## Revendications

1. Dispositif d'enrubannage (14, 38, 59) servant à envelopper ou emballer des balles de produit de récolte en particulier agricoles (15, 29, 45, 52, 54, 55, 68), comprenant un fond d'enrubannage (10, 44, 60) servant à recevoir et à faire pivoter la balle de produit de récolte comprimée et comprenant un cadre de guidage (13, 46, 64) pour au moins un support de matériau d'enrubannage (11, 12, 47, 65) servant à envelopper la balle se trouvant sur le fond d'enrubannage (10, 44, 60) d'un matériau d'enrubannage (22, 23, 48) en forme de bande, **caractérisé en ce que** le cadre de guidage (13, 46, 64) est réglable en hauteur et peut pivoter autour d'un axe (26, 51, 69) horizontal, placé de manière parallèle par rapport à l'axe de rotation (16, 32, 49, 53, 56, 57, 67) de la balle de produit de récolte, afin d'ajuster le centre (20, 21, 50) du matériau d'enrubannage à peu près à hauteur du centre (16, 32, 49, 53, 56, 57, 67) de la balle de produit de récolte à envelopper.

2. Dispositif d'enrubannage selon la revendication 1, **caractérisé en ce que** l'axe (26, 51, 69) est disposé à peu près à hauteur du centre (50) du matériau d'enrubannage (48) destiné à une balle de produit de récolte (52, 68) de taille moyenne se trouvant sur le fond d'enrubannage (10, 44, 60).

3. Dispositif d'enrubannage selon la revendication 1 ou 2, **caractérisé en ce que** le cadre de guidage (13, 46, 64) peut être ajusté selon divers angles d'inclinaison par rapport au fond d'enrubannage (10, 44, 60).

4. Dispositif d'enrubannage selon la revendication 1, **caractérisé en ce que** le cadre de guidage est configuré de manière à pouvoir être coulissé en hauteur dans une direction verticale et en ligne droite de manière perpendiculaire par rapport au fond d'enrubannage (10, 44) et peut être bloqué à diverses distances par rapport au fond d'enrubannage (10, 44).

5. Dispositif d'enrubannage selon l'une quelconque des revendications 1 à 4, **caractérisé en ce que** le cadre de guidage (13, 46) peut être réglé au moyen d'un dispositif de réglage (28) en fonction du diamètre de la balle de produit de récolte (15, 29, 45, 52, 54, 55) et/ou en fonction de la largeur du matériau d'enrubannage (22, 23, 48).

6. Dispositif d'enrubannage selon l'une quelconque des revendications 1 à 5, **caractérisé en ce que** les diamètres réels des balles de produit de récolte (15, 29, 45, 52, 54, 55) déterminés dans une presse à balles rondes (1, 39) appropriée pour presser des balles de diverses dimensions sont utilisés comme paramètres pour le réglage du cadre de guidage (13, 46).

7. Dispositif d'enrubannage selon la revendication 5 ou 6, **caractérisé en ce qu'**un dispositif de commande (33) coopère directement ou indirectement avec un capteur (34) détectant le diamètre des balles et/ou un capteur détectant la largeur du matériau d'enrubannage (22, 23, 48).

8. Dispositif d'enrubannage selon la revendication 7, **caractérisé en ce que** le dispositif de commande (33) coopère avec un capteur (35) déterminant la position du cadre de guidage (13, 46, 64).

9. Dispositif d'enrubannage selon l'une quelconque ou plusieurs des revendications précédentes, **caractérisé en ce qu'**un dispositif de réglage (27, 70) servant à faire pivoter le cadre de guidage (13, 46, 64) est réalisé sous la forme d'un moteur linéaire électrique, pneumatique ou hydraulique.

10. Dispositif d'enrubannage selon l'une quelconque ou plusieurs des revendications précédentes, **caractérisé en ce que** le cadre de guidage (13, 46) peut être tourné avec le support de matériau d'enrubannage (11, 12, 47) de manière motorisée, ou **en ce qu'**au moins un support de matériau d'enrubannage (11, 12, 47) est monté de manière à pouvoir être déplacé au moyen d'un moteur, dans, au niveau de ou sur le cadre de guidage (13, 46).

11. Dispositif d'enrubannage selon l'une quelconque ou plusieurs des revendications précédentes, **caractérisé en ce que** le fond d'enrubannage (44) est installé en aval d'une presse à balles (39), sachant que le cadre de guidage (46) peut être pivoté autour d'un axe de rotation (51) disposé au niveau de son extrémité située à proximité de la presse à balles (39).

12. Dispositif d'enrubannage selon l'une quelconque ou plusieurs des revendications précédentes, **caractérisé en ce que** le cadre de guidage (13) est associé à l'espace de pressage d'une presse à balles (1) et entoure ce dernier, sachant que le fond de l'espace de pressage ou une partie de ce dernier est configuré(e) sous la forme d'un fond d'enrubannage (10).

13. Dispositif d'enrubannage selon l'une quelconque ou plusieurs des revendications précédentes, **caractérisé en ce que** le cadre de guidage (13, 46) peut être fixé dans la position d'enrubannage (30, 46a, 46b) de sorte que ce dernier adopte un écart constant par rapport au fond de transport (10, 44), tandis que le cadre de guidage (13, 46) peut être déplacé dans une position de transport autour de son axe de rotation (26, 51), sachant que le déplacement est limité par des moyens formant ressort et/ou des moyens amortisseurs.

14. Dispositif d'enrubannage selon l'une quelconque ou plusieurs des revendications précédentes, **caractérisé en ce que** le cadre de guidage (13, 46, 64) présente une bordure (18) ou au moins un bras rotatif (62).
